# EUROPEAN PATENT APPLICATION

(11) **EP 3 842 139 A1**
(43) Date of publication of application: **30.06.2021**
(21) Application number: 19853134.5
(22) Date of filing: 11.01.2019
(51) Int. Cl.: B01J 23/38, B01J 21/06, B01J 21/04, B01J 35/02, F01N 3/20, B01D 53/94

(54) **CATALYST FOR PURIFYING EXHAUST GAS**

(30) Priority: 20.08.2018 KR 20180096970
(71) Applicant: LG Hausys, Ltd., Seoul 07326 (KR)
(72) Inventor: KIM, Ha-Na, Seoul 07796 (KR); CHOI, Kyeong-Woo, Seoul 07796 (KR); LEE, Dong-Il, Seoul 07796 (KR); CHOI, Ho-Jin, Seoul 07796 (KR); HYUN, Won-Ji, Seoul 07796 (KR)
(74) Representative: Zacco Sweden AB
(86) International application number: PCT/KR2019/000496
(87) International publication number: WO 2020/040372

(57) **Abstract**

Provided is a catalyst for purifying exhaust gas, comprising: noble metals; alumina support particles; and TiO₂ semiconductor particles supported on the surfaces of the alumina support particles.

## Description

### Technical Field

The present disclosure relates to a catalyst for purifying exhaust gas.

### Background Art

Exhaust gases emitted from internal combustion engines contain substances harmful to an environment and the human body, such as carbon monoxide (CO), hydrocarbon (total hydrocarbon (THC)), and nitrogen oxide (NOₓ). With a recent increase of global environmental awareness, there is a need for improvement in performance of a catalyst for treating exhaust gases to convert the exhaust gas components into carbon dioxide, nitrogen, oxygen, water, and the like, and discharge them.

In order to address one of the problems related to the catalyst for treating the exhaust gas, an aging phenomenon of the catalyst is prevented and a catalyst lifespan is improved.

### Disclosure

### Technical Problem

According to one embodiment of the present disclosure, there is provided a catalyst for purifying exhaust gas to prevent an aging phenomenon of the catalyst occurring due to aggregation of noble metals, obtain durability thereof, and improve a catalyst performance.

### Technical Solution

In one embodiment of the present disclosure, there is provided a catalyst for purifying exhaust gas including noble metal; an alumina support particle; and a TiO₂ semiconductor particle deposited on a surface of the alumina support particle.

### Advantageous Effects

The catalyst for purifying exhaust gas improves a catalyst lifespan by preventing an aging phenomenon of the catalyst occurring due to aggregation and growth of noble metals.

### Description of Drawings

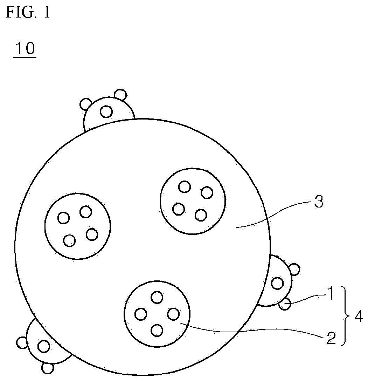

FIG. 1 is a schematic diagram showing a catalyst for purifying exhaust gas according to an embodiment of the present disclosure.

### Detailed Description

Hereinafter, embodiments of the present disclosure are described in detail. However, the embodiments are merely illustrative, the present disclosure is not limited thereto and is only defined by the scope of claims described below.

In one embodiment of the present disclosure, there is provided a catalyst for purifying exhaust gas including noble metals; an alumina support particle; and TiO₂ semiconductor particles deposited on surface of the alumina support particle.

The catalyst for purifying exhaust gas has a novel particle structure in which TiO₂ semiconductor particles are deposited on the surface of alumina support particle.

The noble metals may be deposited on the TiO₂ semiconductor particle. In the present disclosure, the TiO₂ semiconductor particle having the noble metals deposited thereon is referred to as "a composite nanoparticle".

For the catalyst for purifying exhaust gas, the composite nanoparticles are deposited on the alumina support particle, for example, on the surface of the alumina support.

For the catalyst for purifying exhaust gas, the composite nanoparticles are deposited on the alumina support particle and each have a structure in which the noble metals are deposited on the TiO₂ semiconductor particle. In this structure, the noble metals are deposited on the alumina support particle using the TiO₂ semiconductor particles as an intermediate depositing medium. The catalyst for purifying the exhaust gas includes the TiO₂ semiconductor particle as the intermediate depositing medium, and the noble metals deposited on the TiO₂ semiconductor particle remain evenly dispersed on the surface of the alumina support particle, and for example, maintain a nanoparticle state.

If the noble metals are not deposited on the TiO₂ semiconductor particle, but directly supported on the alumina support particle, the noble metal particles are easily aggregated with each other or grown due to high-temperature exhaust gas generated in a high-temperature driving environment. In addition, a porous surface structure of the alumina support is collapsed by the high-temperature exhaust gas and the deposited noble metal particles are embedded or lost, thereby reducing a surface area to be subjected to a catalytic reaction.

In contrast, the aggregation and the growth of the particles of the noble metals deposited on the TiO₂ semiconductor particle are inhibited even when exposed to the high-temperature exhaust gas, such as automobile exhaust gas for a long period of time. Accordingly, the catalyst for purifying exhaust gas improves a catalyst lifespan by preventing aging of the catalyst due to the aggregation and the growth of the noble metals. In addition, the alumina support particle having the composite nanoparticles deposited on the surface thereof forms a structure which is advantageous to suppress the collapse of the surface structure in the high-temperature exhaust gas environment.

Therefore, the structure of the catalyst for purifying exhaust gas allows the noble metals to be better dispersed and maintained in that state, the aggregation of the noble metals in the high-temperature environment to be prevented during catalytic action, or degradation in performance thereof resulting from changes in the surface structure of the alumina support particle to be effectively prevented.

FIG. 1 is a schematic diagram showing the catalyst for purifying exhaust gas according to an embodiment of the present disclosure.

In FIG. 1, the catalyst for purifying exhaust gas 10 includes a composite nanoparticle 4 formed of noble metals 1 and a TiO₂ semiconductor particle 2 and an alumina support particle 3 having the composite nanoparticles 4 deposited on a surface thereof.

In one embodiment, the catalyst for purifying exhaust gas 10 may include 20 to 50 parts by weight of the TiO₂ semiconductor particle 2 relative to 100 parts by weight of the alumina support particle 3, and specifically, 30 to 40 parts by weight of the TiO₂ semiconductor particle 2 relative to 100 parts by weight the alumina support particle 3.

When the catalyst for purifying exhaust gas 10 contains an excessive amount of the TiO₂ semiconductor particle 2 exceeding the above range, the following problems may occur.

First, a number of TiO₂ semiconductor particles to be deposited on the surface of the alumina support particle is increased, thereby generating agglomeration and aggregation between the TiO₂ semiconductor particles and loss of the TiO₂ semiconductor particle having the noble metals deposited thereon, that is, the composite nanoparticle may occur. Therefore, there is a concern in that a catalyst performance may be degraded.

Second, a probability of occurrence of aggregation (or sintering) of the TiO₂ semiconductor particles is increased during sintering and high-temperature aging, thereby degrading the catalyst performance. In particular, TiO₂ is vernerable to heat at a high temperature of 850°C or higher, so a careful use thereof is needed.

Third, when the number of TiO₂ semiconductor particles is increased, the TiO₂ semiconductor particles are vulnerable to moisture, thereby degrading the catalyst performance. The moisture is generated even during actual automobile driving and adversely affects the catalyst performance. For this reason, high-temperature aging (i.e., hydrothermal aging) under the moisture conditions is performed when evaluating the performance of the catalyst for purifying exhaust gas.

Fourth, there is a concern about raising costs. Cost-effectiveness is an important aspect of the catalyst for purifying exhaust gas to achieve equivalent performance and reduce manufacturing costs, for example, material costs.

When the catalyst for purifying exhaust gas includes a small amount of the TiO₂ semiconductor particles less than the above range, the following problems may occur.

First, the effect of preventing the aggregation of the noble metal particles and the deformation/the collpase of the porous surface structure of the alumina support may not be sufficiently obtained.

Second, in order to guarantee the catalytic performance by adjusting a total ratio of the noble metal of the catalyst for purifying exhaust gas to a predetermined level, the lower a ratio of the TiO₂ semiconductor particle to the same mass of the alumina support is, the higher the ratio of the noble metals deposited on the TiO₂ semiconductor particle is. In this case, a distance between the noble metals deposited on the TiO₂ semiconductor particles becomes narrow, thereby increasing a probability of the aggregation of the noble metals and degrading the catalytic performance.

Third, from the same point of view, as the ratio of the TiO₂ semiconductor particles is decreased, the ratio of the noble metal deposited on the TiO₂ semiconductor particle has to be increased. However, it is relatively difficult todeposit the noble metals on the TiO₂ semiconductor particle at a high ratio. In addition, there may be a problem in that a process time and process costs increase.

The composite nanoparticle 4 may be, specifically, a nano-sized TiO₂ semiconductor particle 2 having smaller nano-sized noble metal particle 1 deposited on the surface of the TiO₂ semiconductor particle 2.

The TiO₂ semiconductor particle 2 may have an average diameter of about 10 nm to about 500 nm, specifically, about 20 nm to about 200 nm.

As a size of the composite nanoparticle 4 is determined based on a size of the TiO₂ semiconductor particle 2. The composite nanoparticle 4 also has an average diameter of about 10 nm to about 100 nm, specifically, about 20 nm to about 80 nm.

The average diameter of each of the composite nanoparticle 4 and the TiO₂ semiconductor particle 2 may be calculated by electron microscopy measurements such as scanning electron microscope (SEM) and transmission electron microscope (TEM) image analysis.

The noble metal 1 functions as a catalyst in the exhaust gas purification reaction. The exhaust gas purification reaction is based on an oxidation-reduction reaction to convert exhaust gas components such as carbon monoxide (CO), hydrocarbons (total hydrocarbon (THC)) and nitrogen oxide (NOₓ) included in the exhaust gas into carbon dioxide, nitrogen, oxygen, and water. That is, the noble metal 1 functions as the catalyst in the oxidation-reduction reaction.

The noble metal 1 may include, for example, one selected from the group consisting of ruthenium (Ru), rhodium (Rh), palladium (Pd), osmium (Os), iridium (Ir), platinum (Pt), and combinations thereof.

The noble metal 1 may be classified into a noble metal for an oxidation reaction activation catalyst or a noble metal for a reduction reaction activation catalyst according to types of the exhaust gas purification reaction. For example, the noble metal for the oxidation reaction activation catalyst may include platinum (Pt) or palladium (Pd) and may activate the oxidation reaction to oxidize carbon monoxide to carbon dioxide and hydrocarbon to carbon dioxide and water.

In addition, the noble metal for the reduction reaction activation catalyst may include rhodium and activate a reaction of reducing nitrogen oxide to carbon dioxide and nitrogen using the noble metal.

The type of noble metal 1 may be selected according to use. For example, platinum (Pt), which has excellent activity at low temperatures, may achieve an excellent catalytic performance in an environment generating relatively low temperature exhaust gas such as diesel.

In addition, palladium (Pd) having improved stability, for example, at high temperatures may achieve the excellent catalytic performance and have a long lifespan in an environment generating high-temperature exhaust gas such as gasoline.

In addition, the noble metal 1 is deposited in an alloy form to generate a further improved oxidation-reduction reaction, thereby obtaining excellent effects.

For example, an alloy of platinum (Pt) and palladium (Pd) as the noble metal 1 may further improve oxidation reaction activity.

In addition, the noble metal 1 may be an alloy of platinum (Pt) or palladium (Pd), which is a noble metal for an oxidation reaction activation catalyst, and rhodium (Rh), which is a noble metal for a reduction reaction activation catalyst. The alloy may achieve excellent exhaust gas treatment performance and poisoning resistance to improve a catalyst lifespan.

In addition, the ruthenium (Ru), osmium (Os), iridium (Ir), and the like, form an alloy with the rhodium (Rh), palladium (Pd), platinum (Pt), and the like and the alloy is deposited on the TiO₂ semiconductor particle 2. The composite nanoparticle 4 has the above structure to improve physical and chemical properties such as stiffness, durability, and poisoning resistance of the catalyst.

The noble metal 1 may be a particulate deposited on the TiO₂ semiconductor particle 2 by, for example, photo deposition and have an average particle diameter of several nanometers (nm), specifically, about 0.1 nm to about 30 nm, and specifically, about 1 nm to about 20 nm.

The average diameter of the noble metal 1 may be calculated by the electron microscope measurements such as the SEM and TEM image analysis.

The particle diameter of the noble metal 1 particle is smaller than the particle diameter of the TiO₂ semiconductor particle 2. The particle of the noble metal 1 has the particle diameter within the above range such that an appropriate content of the noble metal 1 is photodeposited on the surface of the TiO₂ semiconductor particle 2, thereby having excellent catalytic activity. Smaller nano-sized noble metal 1 particles may be uniformly dispersed and deposited on the surface of the nano-sized semiconductor particle 2 by the photodeposition.

The noble metals 1 each have the average particle diameter within the above range and are evenly dispersed on the TiO₂ semiconductor particle 2, thereby improving performance of the catalyst for the oxidation-reduction reaction of the exhaust gas purification reaction. In addition, the growth and the aggregation of the noble metals 1 may be greatly suppressed even in the high-temperature exhaust gas environment.

Specifically, when the average particle diameter of the noble metal 1 is less than the above range, the aggregation and the growth of the noble metals may be accelerated by Ostwald ripening, and when the average particle diameter of the noble metal 1 exceeds the above range, the reaction surface area decreases and the exhaust gas processing capability may be degraded.

Accordingly, the exhaust gas treatment catalyst including the noble metal 1 having the average particle diameter within the above range may maintain a catalytic-active large surface area, thereby further improving the catalytic performance.

The composite nanoparticle 4 may uniformly deposit the smaller nano-sized noble metal 1 on the nano-sized TiO₂ semiconductor particle 2 with a high ratio by light irradiation without additional heat treatment. Therefore, the noble metal 1 may have the large surface area to achieve the excellent catalytic performance, excellent thermal stability, and an excellent catalyst lifespan in the high-temperature environment.

The catalyst for purifying exhaust gas includes the composite nanoparticle 4 in which the noble metals 1 are directly deposited on the TiO₂ semiconductor particle 2, not on a carrier such as alumina to physically deposit the noble metals 1 according to a pore size. In this case, the noble metals 1 may be deposited on the TiO₂ semiconductor particle 2 by irradiating the light without additional heat treatment and the aggregation and the growth of the noble metal 1 may be suppressed in the high-temperature environment, thereby having a larger surface area and an excellent catalyst lifespan.

For example, electrons in a valence band (VB) are excited and moved to a conduction band (CB) by irradiating a light having an energy that is greater than a band gap energy of the TiO₂ semiconductor particle 2 and holes are formed in the VB based on the movement of the electrons. In this case, an electron-hole pair (EHP) may be generated. The formed electrons may reduce the noble metals and uniformly disperse small noble metal nanoparticles on the TiO₂ semiconductor particle 2.

The catalyst for purifying exhaust gas 10 may include the noble metal 1 in an amount of about 1 part by weight to about 50 parts by weight relative to 100 parts by weight of the TiO₂ semiconductor particle. For example, the catalyst for purifying exhaust gas 10 may include the noble metal in an amount of about 1 part by weight to about 32 parts by weight relative to 100 parts by weight of the semiconductor nanoparticle solid.

The catalyst for purifying exhaust gas 10 may be adjusted to have a predetermined content of the noble metal 1 of the catalyst for purifying exhaust gas 10 based on a content ratio between the alumina support particle 3 and the TiO₂ semiconductor particle 2 and a content ratio between the TiO₂ semiconductor particle 2 and the noble metal 1 and achieve the remarkably improved exhaust gas treatment performance compared to the noble metal 1 having the same content by being involved in the oxidation-reduction reaction. In addition, the growth, the aggregation, the embedding, and internal diffusion of the noble metals may be greatly suppressed even in the high-temperature exhaust gas environment, thereby having an excellent catalyst lifespan even with a small amount of noble metal.

The catalyst for purifying exhaust gas 10 includes the alumina support particle 3, has a large surface area, and more smoothly participate in the oxidation-reduction reaction to treat the exhaust gas.

The alumina support particle 3 may have an average particle diameter of about 0.5 µm to about 50 µm. Specifically, the alumina support particle 3 may have an average particle diameter of about 0.5 µm to about 10 µm.

The average diameter of the alumina support particle 3 may be calculated by the electron microscopy measurements such as the SEM and TEM image analysis.

The alumina support particle 3 is a support to support the TiO₂ semiconductor particle 2 having the noble metals 1 deposited thereon, that is, the composite nanoparticle 4, has the thermal stability to smoothly support the composite nanoparticle 4 in the high-temperature environment.

The catalyst for purifying exhaust gas 10 includes the alumina support particle 3 to effectively disperse the composite nanoparticles 4. In this case, the noble metals 1 are effectively dispersed and the aggregation and the growth of the noble metals 1 are suppressed to maintain the dispersed state of the noble metals 1 even in the high-temperature exhaust gas environment, thereby further improving the catalyst lifespan.

The alumina support particle 3 may include aluminum oxide (Al₂O₃).

The alumina support particle 3 may have a porous structure. The alumina support particle includes pores; however, the diameter of the composite nanoparticle 4 is larger than an average diameter of a pore at the surface of the alumina support particle 3 such that the composite nanoparticle 4 is deposited on the surface of the alumina support particle 3 and is not deposited at the internal pores (see Fig. 1).

Specifically, the average diameter of the pore at the surface of the alumina support particle 3 may be 10 nm or less.

As each of the composite nanoparticles 4 is deposited on the surface of the alumina support particle 3, the noble metals 1 have a structure in which the noble metals 1 of the composite nanoparticle 4 are also dispersed on the surface of the alumina support particle 3. The noble metals dispersed in the inner pores of the alumina support particle 3 are easily aggregated or grown in the high-temperature exhaust gas environment. However, for the noble metals 1 of the composite nanoparticle 4 deposited on the surface of the alumina support particle 3, the aggregation and the growth thereof may be significantly suppressed.

In one embodiment, the noble metal 1 included in the composite nanoparticle 4 may account for at least 90% by weight of the total noble metal 1 of the catalyst for purifying exhaust gas 10. In other words, the catalyst for purifying exhaust gas 10 may include the noble metal deposited at the inner pores of the alumina support particle 3 with very low or no content, specifically, a content that is less than 10% by weight of the total content of the noble metal of the catalyst for purifying exhaust gas 10.

The catalyst for purifying exhaust gas 10 may activate an oxidation-reduction reaction without the additional treatment, for example, without the light irradiation. Specifically, without additional irradiation of the light such as UV, the catalyst for purifying exhaust gas 10 may convert carbon monoxide (CO), hydrocarbon (total hydrocarbon (THC)), nitrogen oxide (NOₓ) included in the exhaust gas into carbon dioxide, nitrogen, oxygen, and water by being involved in the oxidation-reduction reaction as follows to have catalytic activity.
i) Oxidation reaction of carbon monoxide: CO+O₂ => CO₂
ii) Oxidation reaction of hydrocarbon: CₓH₂ₓ₊₂ + O₂ => CO₂ + H₂O
iii) Reduction reaction of nitrogen oxide: NO + CO => CO₂ + N₂

Hereinafter, a method for preparing the catalyst for purifying exhaust gas 10 is described. The catalyst for purifying exhaust gas 10 is prepared by the method including mixing a noble metal precursor in a suspension containing TiO₂ semiconductor particle 2 to prepare a mixture; irradiating a light to the mixture to prepare a composite nanoparticle 4 which is the TiO₂ semiconductor particle 2 having noble metals 1 deposited thereon; mixing the composite nanoparticle 4 with the alumina support particle 3 to prepare an aqueous composition; and drying and sintering the aqueous composition to prepare the catalyst for purifying exhaust gas 10.

Specifically, the TiO₂ semiconductor particle 2 may be included in an amount of about 0.1 wt% to about 50 wt% in the suspension. For example, the TiO₂ semiconductor particle 2 may be included in an amount of about 0.5 wt% to about 20 wt%. When the content of the TiO₂ semiconductor particles 2 is less than the above range, it is difficult to obtain the TiO₂ semiconductor particles 2 having a sufficient amount of noble metals deposited thereon, thereby increasing a number of manufacturing processes and manufacturing costs. In addition, when the content of the TiO₂ semiconductor particles 2 exceeds the above range, it is difficult to penetrate the irradiated light, so the photoreaction may not be sufficiently performed and a shape and distribution of the noble metals may not be controlled.

The noble metal precursor may include one selected from the group consisting of PtCl₂, H₂PtCl₆, PdCl₂, Na₂PdCl₄, K₂PdCl₄, H₂PdCl₄, RhCl₃, Na₃RhCl₆, K₃RhCl₆, H₃RhCl₆, and combinations thereof.

For example, the noble metal precursor may include a Pt precursor such as PtCl₂ and H₂PtCl₆, a Pd precursor such as PdCl₂, Na₂PdCl₄, K₂PdCl₄, and H₂PdCl₄, and an Rh precursor such as RhCl₃, Na₃RhCl₆, K₃RhCl₆, and H₃RhCl₆.

The mixture may further include a sacrificial agent. The sacrificial agent removes holes generated at the TiO₂ semiconductor particle 2 by light irradiation in order for the electrons generated in the TiO₂ semiconductor particle 2 to efficiently reduce the noble metals. Accordingly, the catalytic activity may be improved.

The sacrificial agent may be included in an amount of about 0.1 parts by weight to about 50 parts by weight relative to 100 parts by weight of the mixture of a noble metal precursor and the suspension containing the TiO₂ semiconductor particles 2. Specifically, when the content of the sacrificial agent is less than the above range, there is a problem in that the noble metals may not be sufficiently reduced, and when the content of the sacrificial agent exceeds the above range, the reduction of the noble metals may not be controlled, resulting in non-uniform particle size distribution and dispersion of the noble metals. In addition, the sacrificial agents are harmful to the environment, so their use is limited.

The sacrificial agent may include one selected from the group consisting of methanol, ethanol, isopropanol, formic acid, acetic acid, and combinations thereof.

The light is irradiated to the mixture to prepare a TiO₂ semiconductor particle 2 having the noble metals deposited thereon, that is, a composite nanoparticle 4. The catalyst for purifying exhaust gas 10 may uniformly disperse the noble metals 1 on the TiO₂ semiconductor particle 2 in a form of small nanoparticle by irradiating the light without additional heat treatment. For example, the light may be irradiated for about 0.5 hours to about 10 hours.

An aqueous composition is prepared by mixing the alumina support particle 3 with the composite nanoparticle 4 obtained as described above.

The aqueous composition may be dried and then fired under a temperature condition of about 300°C to about 700°C.

By the above preparation method, the noble metals 1 are uniformly dispersed on the TiO₂ semiconductor particle 2 with a smaller nano-size, thereby improving the dispersion of the noble metals of the catalyst for purifying exhaust gas 10.

According to an embodiment of the present disclosure, a method for treating automobile exhaust gas using the catalyst for purifying exhaust gas 10 is provided.

The catalyst for purifying exhaust gas 10 may activate the oxidation-reduction reaction without additional treatment, for example, without the light irradiation. Specifically, without the additional irradiation of the light such as the UV, the catalyst for purifying exhaust gas 10 may convert carbon monoxide (CO), hydrocarbon (total hydrocarbon (THC), and nitrogen oxide (NOₓ) included in the exhaust gas into carbon dioxide, nitrogen, oxygen, and water by being involved in the oxidation-reduction reaction to have the catalytic activity.

In addition, the catalyst for purifying exhaust gas 10 may greatly suppress the growth, the aggregation, the embedding, and the internal diffusion of the noble metals even in the high-temperature exhaust gas environment, resulting in an excellent catalyst lifespan even with a small amount of noble metals.

For example, the catalyst for purifying exhaust gas 10 may maintain a diameter size of the noble metal particle of the catalyst particle in a range from about 5 nm to about 80 nm even after aging treatment at a high temperature of about 750°C for about 24 hours.

Hereinafter, embodiments and comparative examples of the present disclosure are described. The following embodiments are only examples of the present disclosure, and the present disclosure is not limited to the following embodiments.

### Embodiment 1

A 0.5 wt% of suspension was prepared by dispersing rutile titanium dioxide (TiO₂) (having 50 nm of an average particle diameter obtained by TEM image analysis) powder in water. While continuously stirring the rutile titanium dioxide suspension, a H₂PtCl₆ precursor was mixed with the rutile titanium dioxide suspension to adjust a content of Pt to 8 parts by weight relative to 100 parts by weight of the rutile titanium dioxide solid and the H₂PtCl₆ precursor and the rutile titanium dioxide suspension were stirred for 10 minutes. As a sacrificial agent, methyl alcohol was added in an amount of 10 parts by weight relative to 100 parts by weight of the mixture of the H₂PtCl₆ precursor and the suspension containing the rutile titanium dioxide, and stirred continuously. Subsequently, the mixture of the rutile titanium dioxide and the noble metal precursor was continuously stirred and ultraviolet rays were irradiated thereto for about 2 hours to perform the light irradiation. After the light irradiation, the mixture was dried to prepare a composite nanoparticle which is the TiO₂ semiconductor particle having Pt deposited thereon.

An average particle diameter of the Pt particle deposited in the composite nanoparticle was obtained by the TEM image analysis, which was 3 nm.

Additionally, an alumina support particle (Al₂O₃) (having an average particle diameter of 5 µm obtained by the TEM image analysis) was prepared.

The obtained composite nanoparticle and alumina support particle were mixed to prepare an aqueous composition, dried, and then sintered at 500°C to prepare a catalyst for purifying exhaust gas. A mixing ratio of the composite nanoparticle and the alumina support particle was adjusted using inductively coupled plasma (ICP) to adjust a content of the Pt particle in the finally obtained catalyst for purifying exhaust gas to 2 wt%.

Based on a result of measuring a mass ratio of the TiO₂ semiconductor particle to the alumina support particle using the ICP for the obtained catalyst for purifying exhaust gas, the TiO₂ semiconductor particle was 34 parts by weight relative to 100 parts by weight of the alumina particle support.

### Embodiment 2

A composite nanoparticle was prepared in the same manner as described in Embodiment 1 except that, when preparing the composite nanoparticle, a H₂PtCl₆ precursor was mixed with the rutile titanium dioxide suspension to adjust a content of Pt to 12 parts by weight relative to 100 parts by weight of the rutile titanium dioxide solid (i.e., an amount of deposited PT of the composite nanoparticle was increased).

Subsequently, the same alumina support particle as that of Embodiment 1 was prepared, mixed with the composite nanoparticle to prepare a catalyst for purifying exhaust gas in the same manner as described in Embodiment 1. In this case, a mixing ratio of the composite nanoparticle and the alumina support particle was adjusted using inductively coupled plasma (ICP) to adjust a content of a Pt particle in the finally prepared catalyst for purifying exhaust gas to 2 wt%.

Based on a result of measuring a mass ratio of the TiO₂ semiconductor particle and the alumina support particle using the ICP for the obtained catalyst for purifying exhaust gas, the TiO₂ semiconductor particle was 21 parts by weight relative to 100 parts by weight of the alumina particle support.

### Embodiment 3

A composite nanoparticle was prepared in the same manner as described in Embodiment 1 except that, when preparing a composite nanoparticle, a H₂PtCl₆ precursor was mixed with the rutile titanium dioxide suspension to adjust a content of Pt to 16 parts by weight relative to 100 parts by weight of a rutile titanium dioxide solid to prepare a composite nanoparticle (i.e., an amount of PT deposited in the composite nanoparticle was increased).

Subsequently, the same alumina support particle as that of Embodiment 1 was prepared, mixed with the composite nanoparticle to prepare a catalyst for purifying exhaust gas in the same manner as described in Embodiment 1. In this case, a mixing ratio of the composite nanoparticle and the alumina support particle was adjusted using inductively coupled plasma (ICP) to adjust a content of a Pt particle in the finally prepared catalyst for purifying exhaust gas to 2 wt%.

Based on a result of measuring a mass ratio of the TiO₂ semiconductor particle to the alumina support particle using the ICP for the obtained catalyst for purifying exhaust gas, the TiO₂ semiconductor particle was 15 parts by weight relative to 100 parts by weight of the alumina particle support.

### Embodiment 4

A composite nanoparticle was prepared in the same manner as described in Embodiment 1 except that, when preparing the composite nanoparticle, a H₂PtCl₆ precursor was mixed with the rutile titanium dioxide suspension to adjust a content of Pt to be 5 parts by weight relative to 100 parts by weight of the rutile titanium dioxide solid (i.e., an amount of Pt deposited in the composite nanoparticle was reduced).

Subsequently, the same alumina support particle as in Embodiment 1 was prepared, mixed with the composite nanoparticle to prepare a catalyst for purifying exhaust gas in the same manner as described in Embodiment 1. In this case, a mixing ratio of the composite nanoparticle and the alumina support particle was adjusted using inductively coupled plasma (ICP) to adjust a content of a Pt particle in the finally prepared catalyst for purifying exhaust gas to 2 wt%.

Based on a result of measuring a mass ratio of a TiO₂ semiconductor particle to the alumina support particle using the ICP for the obtained catalyst for purifying exhaust gas, the TiO₂ semiconductor particle was 70 parts by weight relative to 100 parts by weight of the alumina particle support.

### Comparative Example 1

An alumina support particle (Al₂O₃) (having an average particle diameter of 5 µm obtained by TEM image analysis) was dispersed in water to prepare an aqueous solution. While continuously stirring the aqueous solution, a H₂PtCl₆ precursor was added to adjust a content of Pt to 2.4 parts by weight relative to 97.6 parts by weight of a Al₂O₃ solid. The Al₂O₃ aqueous solution containing the Pt precursor was stirred at a temperature of 60°C for 2 hours. After the stirring, the aqueous solution was dried for 24 hours at a temperature of 80°C, and sintered for 2 hours at a temperature of 550°C to prepare a catalyst for purifying exhaust gas which is an Al₂O₃ particle having Pt deposited thereon. Based on a result of measuring the content of Pt relative to the obtained catalyst for purifying exhaust gas using inductively coupled plasma (ICP) for the obtained catalyst for purifying exhaust gas, the Pt content was 2 wt%.

### Evaluation

### Experimental Example 1: Evaluation of purification performance

In order to evaluate exhaust gas treatment performances of the exhaust gas treatment catalysts in Embodiments 1 to 4 and Comparative Example 1, the treatment performances were evaluated using an automobile exhaust gas purification performance evaluation facility (Gas Chromatograph Analyzer, ABB Ltd.). For each of the exhaust gas treatment catalysts in Embodiments 1 to 4 and Comparative Example 1, a light off temperature (LOT) evaluation was performed in an oxidation reaction of carbon monoxide (CO + O₂ -> CO₂) within a reaction temperature range of about 50°C to about 500°C under conditions of 1000 ppm of carbon monoxide of 5 L/min of total flow rate (nitrogen balance). The LOT (°C) is a temperature measured when a purification rate reaches 50%, and the catalyst particles with a lower LOT level are determined to achieve good purification performance.

Specifically, the evaluation method is as follows.

A catalyst sample evaluated contains a same amount of noble metal (e.g., 2 wt% of Pt), was processed into a pellet (having a size of 600 µm to 1000 µm), tested, and evaluated. In a reaction for evaluating a purification performance, a reaction temperature was raised from 50°C to 500°C at a rate of 10 °C/min. In this case, 5000 cc/min of similar exhaust gas including the CO was injected and a concentration of gas (e.g., CO) is detected in real time using an infrared photometer. Components of the injected gas are shown in Table 1 below.

**Table 1**

| | | | | | | | |
|---|---|---|---|---|---|---|---|
| Gas compo nent | N₂ | O₂ | H₂O | CO₂ | CO | C₃H₆, C₃H₈ | NO |
| | Balance | 5 wt% | 10 wt% | 5 wt% | 1000 ppm | 1000 ppm | 150 ppm |

Measured LOTs are shown in Table 2 below.

**Table 2**

| Classification | A content (parts by weight) of a TiO₂ semiconductor particle relative to 100 parts by weight of an alumina support particle | An amount (parts by weight) of Pt deposited relative to 100 parts by weight of a TiO₂ semiconductor particle of a composite nanoparticle | LOT(°C) |
|---|---|---|---|
| Embodiment 1 | 34 | 8 | 364 |
| Embodiment 2 | 21 | 12 | 371 |
| Embodiment 3 | 15 | 16 | 382 |
| Embodiment 4 | 70 | 5 | 389 |
| Comparative Example 1 | - | - | 401 |

The contents of the TiO₂ semiconductor particles in the catalyst for purifying exhaust gass in Embodiments 1 to 4 and Comparative Example 1 were changed; however, the content of Pt in the catalyst for purifying exhaust gas was almost constant. In Table 2, the amount of Pt deposited (parts by weight) relative to 100 parts by weight of the TiO₂ semiconductor particle of the composite nanoparticle was determined.

### Experimental Example 2: Evaluation of Vulnerability to Moisture

Compared to Experimental Example 1, a purification performance of a catalyst for purifying exhaust gas was evaluated in the same manner as described in Experimental Example 1, except that 10 wt% of moisture was added and evaluated under the evaluation conditions. The 10 wt% of moisture was added with other exhaust gas-like components in a form of water vapor by evaporating the water introduced through a pump and a mass flow controller at a temperature of 350°C (by an evaporizer).

The evaluation results are shown in Table 3 below.

**Table 3**

| Classification | LOT(°C) |
|---|---|
| Embodiment 1 | 369 |
| Embodiment 2 | 380 |
| Embodiment 3 | 393 |
| Embodiment 4 | 404 |
| Comparative Example 1 | 427 |

Although the preferred embodiments of the present disclosure have been described in detail above, the scope of the present disclosure is not limited thereto, and various modifications and changes made by those skilled in the art using the basic concept of the present disclosure defined in the following claims also belong to the scope of the disclosure.

### <Description of Symbols>

1: Noble metal
2: TiO₂ semiconductor particle
3: Alumina support particle
4: Composite nanoparticle
10: Catalyst for purifying exhaust gas

## Claims

1. A catalyst for purifying exhaust gas, comprising: noble metal; an alumina support particle; and a TiO₂ semiconductor particle deposited on a surface of the alumina support particle.

2. The catalyst for purifying exhaust gas of claim 1, comprising 20 to 50 parts by weight of the TiO₂ semiconductor particle relative to 100 parts by weight of the alumina support particle.

3. The catalyst for purifying exhaust gas of claim 1, comprising a composite nanoparticle,
wherein the composite nanoparticle is the TiO₂ semiconductor particle having the noble metal deposited thereon.

4. The catalyst for purifying exhaust gas of claim 3, wherein the noble metal comprised in the composite nanoparticle occupies at least 90% by weight of a total noble metal comprised in the catalyst for purifying exhaust gas.

5. The catalyst for purifying exhaust gas of claim 3, wherein a diameter of the composite nanoparticle is larger than an average diameter of a pore at the surface of the alumina support particle.

6. The catalyst for purifying exhaust gas of claim 3, wherein an average diameter of the composite nanoparticle is 10 nm to 500 nm.

7. The catalyst for purifying exhaust gas of claim 1 or 3, wherein an average diameter of the alumina support particle is 0.5 µm to 50 µm.

8. The catalyst for purifying exhaust gas of claim 1, wherein the noble metal comprises one selected from the group consisting of ruthenium (Ru), rhodium (Rh), palladium (Pd), osmium (Os), iridium (Ir), platinum (Pt), and a combination thereof.

9. The catalyst for purifying exhaust gas of claim 1, comprising 1 to 50 parts by weight of the noble metal relative to 100 parts by weight of the TiO₂ semiconductor particle.
